(19) Europäisches Patentamt
European Patent Office
Office européen des brevets

(11) **EP 2 301 893 B1**

(12) **EUROPEAN PATENT SPECIFICATION**

(45) Date of publication and mention
of the grant of the patent:
**13.06.2018 Bulletin 2018/24**

(21) Application number: **09797979.3**

(22) Date of filing: **16.07.2009**

(51) Int Cl.:
*C02F 1/42* (2006.01)  *B01J 45/00* (2006.01)
*C02F 101/20* (2006.01)  *C02F 1/28* (2006.01)
*C02F 1/68* (2006.01)  *B01J 31/40* (2006.01)
*B01J 31/22* (2006.01)  *B01J 49/50* (2017.01)
*B01J 49/05* (2017.01)

(86) International application number:
**PCT/JP2009/062913**

(87) International publication number:
**WO 2010/008055 (21.01.2010 Gazette 2010/03)**

(54) **METHOD FOR TREATING WASTEWATER**

VERFAHREN ZUR BEHANDLUNG VON ABWASSER

PROCÉDÉ POUR TRAITER DES EAUX USÉES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **17.07.2008 JP 2008186235**

(43) Date of publication of application:
**30.03.2011 Bulletin 2011/13**

(60) Divisional application:
**16151593.7 / 3 034 472**

(73) Proprietor: **Mitsubishi Chemical Corporation
Tokyo 100-8251 (JP)**

(72) Inventors:
• **SUMI Yoshiyuki
Kitakyushu-shi
Fukuoka 806-0004 (JP)**
• **FUKUI Katsuhiko
Kitakyushu-shi
Fukuoka 806-0004 (JP)**
• **MIYAMOTO Satoshi
Kitakyushu-shi
Fukuoka 806-0004 (JP)**
• **MINEMOTO Kouki
Kitakyushu-shi
Fukuoka 806-0004 (JP)**

(74) Representative: **Vossius & Partner
Patentanwälte Rechtsanwälte mbB
Siebertstrasse 3
81675 München (DE)**

(56) References cited:
JP-A- 10 085 740    JP-A- 11 152 246
JP-T- 2003 507 156    US-A1- 2002 035 216
US-A1- 2006 173 083    US-A1- 2007 062 878
US-B1- 6 649 663

**Description**

Technical Field

The present invention relates to a method for treating a wastewater in an aromatic carboxylic acid production process and a treating apparatus thereof.

Background Art

Wastewaters containing heavy metal compounds are discharged from a variety of industrial plants such as various chemical plants, electronic parts-producing facilities, food-processing facilities, metal-processing facilities, metal-plating facilities, printing plate-making facilities, and photograph facilities and further electric power-generating facilities for thermal power generation, nuclear power generation, and the like. Examples of the chemical plants include production facilities and the like of ethylene oxide, ethylene glycol, methanol, ethanol, higher alcohols, acrylic acid, acrylic acid esters, and aromatic carboxylic acids or esters thereof such as terephthalic acid, terephthalic acid esters, isophthalic acid, and isophthalic acid esters.

For example, when the production of terephthalic acid is mentioned as an example, terephthalic acid is produced by liquid-phase oxidation of p-xylene with molecular oxygen under pressure in the presence of a catalyst composed of a heavy metal compound such as cobalt or manganese and a bromine compound in an acetic acid solvent. A slurry containing terephthalic acid after the reaction is subjected to solid-liquid separation and washing and the resulting terephthalic acid cake is dried to form crude terephthalic acid, which is then transferred to a hydrogenation step for purification to form highly purified terephthalic acid. On the other hand, since the separated mother liquid and the washing liquid (hereinafter referred to as mother liquid and the like) formed in the solid liquid separation contain, in addition to the acetic acid solvent, organic substances such as terephthalic acid and components such as the metal component of the catalyst (hereinafter referred to valuable components), the mother liquid and the like are recycled to the oxidation reaction step and re-used therein. However, since organic substances in the mother liquid and the like contain impurities such as p-toluic acid, 4-carboxybenzaldehyde, and benzoic acid, a part of the mother liquid and the like is purged to outside of the production steps and the remainder is re-used, in order to avoid quality deterioration of terephthalic acid owing to the accumulation of such impurities. However, since the mother liquid and the like to be purged to outside of the production steps contain a considerable amount of valuable components as mentioned above, it is economically and environmentally necessary to collect and re-use the valuable components . As a method for collecting the valuable components, in general, acetic acid is evaporated, then water is separated by distillation for re-use, and heavy metal components of the catalyst are collected from the residue at the evaporation.

Patent Document 1 proposes a conventional method, which aims at improvement in collection rate of the metal components in the production of terephthalic acid. According to the Document, water is added to the remaining concentrate of the reaction mother liquid to dissolve the heavy metal components of the catalyst to form an aqueous solution and, in the case where a minute amount of terephthalic acid and the other reaction by-products precipitate as solid matter, solid-liquid separation is performed. The reported method further comprises the following: an alkali carbonate is added to the resulting aqueous solution to form carbonates of cobalt and manganese as heavy metal components, which are formed into a slurry in a continuous precipitation concentrating apparatus; the concentrated slurry is taken out from the bottom of the apparatus and, after the slurry is reacted with acetic acid, the slurry is re-used in the oxidation reaction.

Patent Document 2 reports a method for preventing a decrease in catalyst collection rate resulting from insufficient solid-liquid separation caused by micro-particles in the slurry, which method comprises, in the production of terephthalic acid, adding water to the concentrate of the reaction mother liquid to form a slurry and adjusting aromatic aldehyde concentration in the slurry, acetic acid concentration therein, and cooling temperature to effect solid-liquid separation.

Patent Document 3 reports a method for collecting an aqueous catalyst solution, which comprises, in the production of terephthalic acid, treating the remaining concentrate of the reaction mother liquid with hot water under stirring, then granulating the resulting hot-water slurry under stirring to form a granulated slurry, performing the treatment with hot water and the granulating treatment in separate stirring tanks at that time, and finally subjecting the resulting granulated slurry to solid-liquid separation.

In addition, Patent Document 4 proposes a method for purifying a waste washing liquid derived from the production of an aromatic acid, which comprises separating an insoluble aromatic acid by means of a filtration machine, then adsorbing metal components such as iron, nickel, and chromium in the filtrate on a strongly acidic cation-exchange resin, subsequently adsorbing cobalt and manganese of the catalyst metals on a chelate resin, further removing dissolved organic substances by passing the filtrate through a reverse osmosis membrane system, and recycling the resulting liquid into the production steps.

Document List

Patent Document

    [Patent Document 1] JP-A-5-15788
    [Patent Document 2] JP-A-2004-321889
    [Patent Document 3] JP-A-2006-312166
    [Patent Document 4] JP-A-2003-507156

Summary of the Invention

However, the method disclosed in the above Patent Document 4 shows defects that a decrease in adsorption ability occurs at an early stage, the life of the chelate resin is insufficient, and so forth, so that the method does not reach an industrially practical level from technical and economical viewpoints.

According to the technologies shown in the above, the collection rate of heavy metal compounds is improved to some extent as before but is not a sufficient level for industrial use. Particularly, in large-scale production plants such as a terephthalic acid production plant, further solution on environmental conservation has been desired.

The portions where the heavy metal compounds remain and are discharged to outside of the production process are the solid matter derived from the solid-liquid separation from the remaining concentrate and the filtrate derived from the solid-liquid separation after the formation of the carbonate salts in Patent Document 1. Furthermore, the heavy metal compounds also remain in the filtrate derived from the solid-liquid separation of the highly purified terephthalic acid slurry. Usually, the solid matter is subjected to incineration or reclamation treatment and the filtrate is usually discharged as a wastewater after biological treatment. The heavy metal compounds in the filtrate generated from such a terephthalic acid production process are present in a low concentration and a method for efficiently collecting the heavy metal compounds present in a low concentration has hitherto not been known. Therefore, the wastewater containing the heavy metal compounds in a low concentration is frequently released to river and the like after the biological treatment. Thus, an efficient collecting method of the heavy metal compounds has not yet been established.

It is the actual condition that the amount of the heavy metal compounds discharged to outside of the production process reaches, in total, 5 to 10% of the whole amount thereof used. Under such a situation that the regulation on the discharge of the heavy metal compounds as wastewater becomes severer, efficient collection of the heavy metal compounds from wastewater becomes an extremely important factor not only from the economical viewpoint but also from the environmental viewpoint. Also, from such viewpoints, the release of the heavy metal compounds to the outside should be suppressed as far as possible. However, a method for treating a wastewater, which satisfies the above requirements, has not hitherto been known.

The present invention is devised in consideration of the above problems and an object thereof is to provide a method for treating a wastewater, which can efficiently collect a heavy metal compound from a wastewater containing the heavy metal compound derived from an aromatic carboxylic acid production process.

Means for Solving the Problems

As a result of extensive studies in consideration of the above actual situations, in the method comprising bringing a wastewater derived from an aromatic carboxylic acid production process into contact with a chelate resin to collect a heavy metal compound contained in the wastewater by the chelate resin, the present inventors have found that the heavy metal compound can be efficiently collected by using a chelate resin having a specific shape. Thus, they have accomplished the following first invention.

Moreover, as a result of extensive studies in consideration of the above actual situations, in the method comprising bringing a wastewater derived from an aromatic carboxylic acid production process into contact with a chelate resin to collect a heavy metal compound contained in the wastewater by the chelate resin, the present inventors have found that the heavy metal compound can be efficiently collected by using a chelate resin showing a specific decreasing rate of Cu adsorption capacity. Thus, they have accomplished the following second embodiment.

In addition, as a result of extensive studies in consideration of the above actual situations, in the method comprising bringing a wastewater derived from an aromatic carboxylic acid production process into contact with a chelate resin to collect a heavy metal compound contained in the wastewater by the chelate resin and subsequently regenerating the chelate resin to obtain a regeneration liquid containing the heavy metal compound, the present inventors have found that the heavy metal compound can be efficiently collected by bringing the wastewater into contact with the chelate resin under specific conditions and regenerating the chelate resin after the contact with the wastewater under specific conditions. Thus, they have accomplished the following third embodiment.

Namely, the first invention is a method for treating a wastewater comprising obtaining a wastewater derived from an aromatic carboxylic acid production process, bringing the wastewater into contact with a chelate resin to collect a heavy metal compound contained in the wastewater by the chelate resin, wherein the chelate resin is particles having a uniformity coefficient of 1.4 or less, wherein the pH of the wastewater to be brought into contact with the chelate resin is 5.1 or more to 5.9 or less. When the pH of the wastewater exceeds the above range, the heavy metal compound may precipitate to deposit on the surface of the chelate resin and thus the compound may become impossible to collect. On the other hand, when the pH of the wastewater is less than the above range, terephthalic acid and organic substances such as p-toluic acid contained in the wastewater may deposit or the collection rate of the heavy metal compound may decrease and, wherein the heavy metal is selected from cobalt and manganese.
The measuring method of the uniformity coefficient in the invention will be detailed later.

The present invention also relates to the use of a wastewater-treating apparatus for bringing a wastewater from an aromatic carboxylic acid production process into contact with a chelate resin to collect a heavy metal compound contained in the wastewater by the chelate resin, wherein the chelate resin is particles having a uniformity coefficient of 1.4 or less, wherein the pH of the wastewater to be brought into contact with the chelate resin is 5.1 or more to 5.9 or less, and wherein the heavy metal is selected from cobalt and manganese.

Moreover, herein disclosed as a second embodiment is a method for treating a wastewater, comprising bringing a wastewater derived from an aromatic carboxylic acid production process into contact with a chelate resin to collect a heavy metal compound contained in the wastewater by the chelate resin, wherein a decreasing rate of Cu adsorption capacity of the chelate resin is 11%/month or less. In the second embodiment, the above explanations with respect to the pH preferably apply.

Also, in the methods for treating a wastewater according to the first invention and the second embodiment, the flow rate of the wastewater to be brought into contact with the chelate resin is preferably 5 m/hr or more to 14 m/hr or less. When the flow rate of the wastewater exceeds the above range, there is a tendency that the heavy metal compound contained in the wastewater cannot efficiently be adsorbed by the chelate resin owing to the influences of drift and channeling. When the flow rate is less than the above range, it is necessary to enlarge the vessel for placing the chelate resin, so that the case tends to be disadvantageous from the economical viewpoint.

Further disclosed herein as a third embodiment is a method for treating a wastewater comprising: bringing a wastewater derived from an aromatic carboxylic acid production process into contact with a chelate resin to collect a heavy metal compound contained in the wastewater by the chelate resin; and subsequently regenerating the chelate resin to obtain a regeneration liquid containing the heavy metal compound, wherein the pH of the wastewater to be brought into contact with the chelate resin is 5.1 or more to 5.9 or less, the flow rate of the wastewater to be brought into contact with the chelate resin is 5 m/hr or more to 14 m/hr or less, and the chelate resin is regenerated using an aqueous hydrogen bromide solution of 7.1% by mass or more to 19% by mass or less.

In the method for treating a wastewater according to the third embodiment, the chelate resin is preferably particles having a uniformity coefficient of 1.4 or less. In the case where the uniformity coefficient exceeds the above range, when the wastewater is adsorbed and regenerated by a fixed bed flow method, pressure loss in the resin layer is apt to occur, which may be one cause of a decrease in deterioration rate to be detailed later.

Moreover, in the methods for treating a wastewater according to the first invention as well as the second and third embodiments, the temperature of the wastewater to be brought into contact with the chelate resin is preferably 51°C or higher to 59°C or lower. When the temperature of the wastewater is lower than the above range, in the case where terephthalic acid is contained in the wastewater, it tends to easily precipitate and the collection rate of the heavy metal compound decreases. On the other hand, when the temperature of the wastewater exceeds the above range, the chelate resin tends to easily deteriorate.

Furthermore, in the methods for treating a wastewater according to the first invention as well as the second and third embodiments, the Cu adsorption capacity of the chelate resin is preferably 0.5 mmol/mL or more. The upper limit of the Cu adsorption capacity of the chelate resin is not limited and the larger chelating capacity before wastewater treatment is more preferred. The measuring method of the Cu adsorption capacity will be detailed later.

In addition, in the method for treating a wastewater according to the third embodiment the regeneration liquid can be recycled to an oxidation reaction system in the aromatic carboxylic acid production process.

Furthermore, as a fourth embodiment, there is provided a wastewater-treating apparatus for bringing a wastewater derived from an aromatic carboxylic acid production process into contact with a chelate resin to collect a heavy metal compound contained in the wastewater by the chelate resin, wherein the chelate resin is particles having a uniformity coefficient of 1.4 or less.

Advantage of the Invention

According to the first invention as well as the second and fourth embodiments, heavy metal compounds such as cobalt and manganese contained in a wastewater derived from an aromatic carboxylic acid production process can be highly efficiently collected. In the case where the uniformity coefficient exceeds a predetermined range, pressure loss in the resin layer is apt to occur when the wastewater is adsorbed by a fixed bed flow method.

According to the third embodiment, it becomes possible to collect the heavy metal compounds such as cobalt and manganese contained in a wastewater derived from an aromatic carboxylic acid production process in a high efficiency and to re-use it.

According to the invention, since the above effects are obtained, the above metal components released to outside of the production process can be suppressed to the minimum relative to the total amount of the above metal components used and thus it becomes possible to provide an environmentally-friendly aromatic carboxylic acid production process which is unprecedented. The process further affords a large economical effect, which is obtained by collecting and re-using the heavy metal compounds. In general, petrochemical plants are frequently constituted by different kinds of chemical plants in one area or in one industrial district as an aggregate. Therefore, industrial wastewater species discharged therefrom are different from one another but there is a case where plant wastewaters from different kinds of chemical plants discharging the heavy metal compounds as above are merged and released to the outside depending on the situation. Since the method for treating a wastewater according to the invention can achieve the collection and re-use of the heavy metal compounds such as cobalt and manganese contained in the wastewater in a high efficiency as far as the wastewater contains a wastewater derived from a production process of an aromatic carboxylic acid represented by terephthalic acid even when wastewaters from different types of chemical plants are present, the advantages are high not only from the economical viewpoint but also from the environmental viewpoint.

Brief Description of the Drawings

[FIG. 1] FIG. 1 is a flow chart schematically showing one example of the production steps of highly purified terephthalic acid according to the invention.
[FIG. 2] FIG. 2 is a production flow example of the production steps of highly purified terephthalic acid according to the invention.
[FIG. 3] FIG. 3 is a flow example of the collection steps of heavy metal compounds according to the invention.

[Mode for Carrying Out the Invention]

The following will describe the invention in more detail. The invention is not limited to the following modes for carrying out the invention and can be carried out with variously changing then within the gist thereof.

<Production Process of Aromatic Carboxylic Acid>

The following will describe the production process of an aromatic carboxylic acid. The starting material for producing an aromatic carboxylic acid is not limited but usually, an aromatic compound having an alkyl group is used. The aromatic ring constituting the aromatic compound may be a monocyclic ring or a polycyclic ring.

Examples of the above alkyl group include a methyl group, an ethyl group, an n-propyl group, and an isopropyl group.

Specific examples of the aromatic compound having an alkyl group include di- and tri-alkylbenzenes, di- and tri-alkylnaphthalenes, and di- and tri-alkylbiphenyls. Preferred examples thereof include m-diisopropylbenzene, p-diisopropylbenzene, m-cymene, p-cymene, o-xylene, m-xylene, p-xylene, trimethylbenzenes, 2,6- or 2,7-dimethylnaphthalene, 2,6-diisopropylnaphthalene, and 4,4'-dimetylbiphenyl. Among them, preferred compounds owing to high reactivity include alkylbenzenes, alkylnaphthalenes, and alkylbiphenyls having 2 to 4 alkyl groups containing 1 to 4 carbon atoms, such as a methyl group, an ethyl group, an n-propyl group, and an isopropyl group.

Moreover, the aromatic compound having an alkyl group may be partially oxidized. This is a compound where the alkyl group in the above aromatic compound having an alkyl group is oxidized to an aldehyde group, an acyl group, a carboxyl group, or a hydroxyalkyl group but is not oxidized so as to be an objective aromatic carboxylic acid. Specifically, examples thereof include 3-methylbenzaldehyde, 4-methylbenzaldehyde, m-toluic acid, p-toluic acid, 3-formylbenzoic acid, 4-formylbenzoic acid, and 2-methyl-6-formylnaphthalenes.

These starting materials can be used singly or in combination of two or more thereof.

Considering all the above, xylenes (o-xylene, m-xylene, p-xylene) are preferred as the starting material and particularly, p-xylene is preferred. In the case of using p-xylene as a starting material, examples of the aromatic compound having a partially oxidized alkyl group include 4-carboxybenzaldehyde (hereinafter sometimes referred to as 4CBA), p-tolualdehyde, and p-toluic acid and terephthalic acid is obtained as the aromatic carboxylic acid.

These starting materials are usually oxidized in a liquid phase under high temperature and high pressure in the presence of molecular oxygen in a reaction solvent containing a lower aliphatic carboxylic acid using a heavy metal compound and, if necessary, a bromine compound as oxidation catalysts, thereby aromatic carboxylic acids being obtained. The resulting aromatic carboxylic acids are converted to products through purification/separation steps depending on targeted quality.

The kind of the aromatic carboxylic acid to which the invention is applied is not particularly limited and examples thereof include o-phthalic acid, isophthalic acid, terephthalic acid, trimellitic acid (benzenetricarboxylic acid), 2,6- or 2,7-naphthalenedicarboxylic acid, and 4,4'-biphenyldicarboxylic acid. Of these, it is preferred to apply the invention to the production of phthalic acids (o-phthalic acid, isophthalic acid, terephthalic acid), and it is particularly preferred to apply it to the production of terephthalic acid.

<Production Process of Highly Purified Terephthalic Acid>

As a representative aromatic carboxylic acid according to the invention, highly purified terephthalic acid may be mentioned. The following will describe a production process for obtaining highly purified terephthalic acid using p-xylene as a starting material but, at the production of other aromatic carboxylic acids, it is also possible to produce them similarly with suitably changing the process. The process for producing highly purified terephthalic acid specifically comprises the following steps, for example.

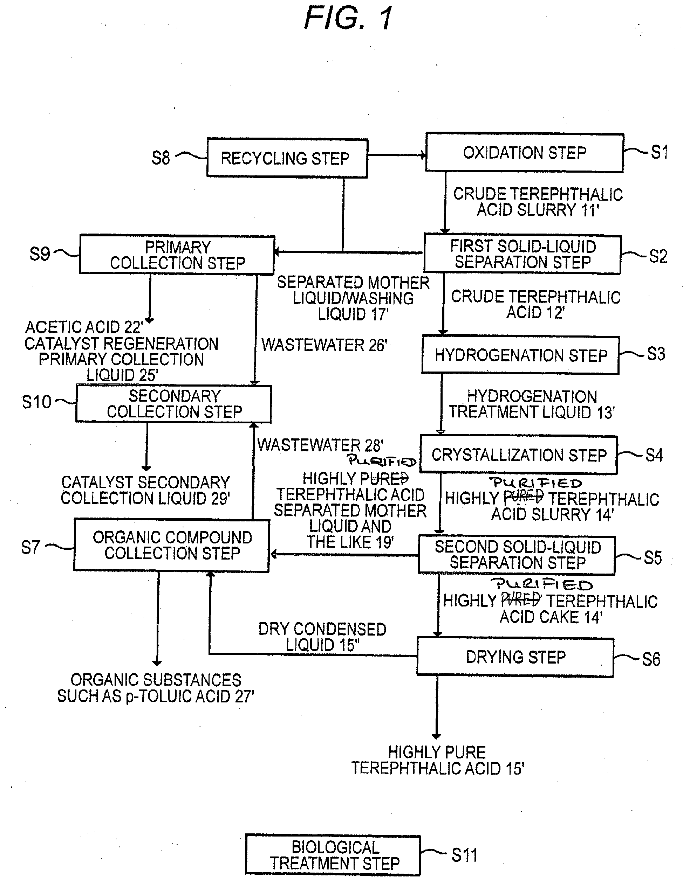

FIG. 1 is a flow chart schematically showing one example of the production steps of highly purified terephthalic acid. As shown in FIG. 1, the process for producing highly purified terephthalic acid comprises 11 steps as shown below.

(S1) Oxidation step: a step of oxidizing p-xylene in the presence of a catalyst and, if necessary, performing crystallization to obtain a crude terephthalic acid slurry 11' . (S2) First solid-liquid separation step: a step of subjecting the above crude terephthalic acid slurry 11' to solid-liquid separation and washing and drying the resulting terephthalic acid cake to obtain separated mother liquid/washing liquid 17' and crude terephthalic acid 12'.

(S3) Hydrogenation step: a step of dissolving the above crude terephthalic acid 12' in water and hydrogenating the solution to obtain a hydrogenation treatment liquid 13'.

(S4) Crystallization step: a step of crystallizing the above hydrogenation treatment liquid 13' to obtain a highly purified terephthalic acid slurry 14'.

(S5) Second solid-liquid separation step: a step of subjecting the above highly purified terephthalic acid slurry 14' to solid-liquid separation and washing the resulting product to obtain a highly purified terephthalic acid cake 14" and a highly purified terephthalic acid separated mother liquid and the like 19'.

(S6) Drying step: a step of drying the above highly purified terephthalic acid cake 14" to obtain highly purified terephthalic acid 15' and a dry condensed liquid 15".

(S7) Organic compound collection step: a step of collecting organic compounds (organic substances such as p-toluic acid 27') from the whole amount or a part of the highly purified terephthalic acid separated mother liquid and the like 19' and the dry condensed liquid 15" discharged from the above steps S5 and S6.

(S8) Recycling step: a step of recycling a part or the whole amount of the separated mother liquid/washing liquid 17' obtained in the above step S2 to the step S1.

(S9) Primary collection step: a step of collecting acetic acid 22' from the separated mother liquid/washing liquid 17' unrecycled in the above step S8 and subsequently collecting a catalyst regeneration primary collection liquid 25' containing a catalyst metal component.

(S10) Secondary collection step: a step of collecting and re-using a catalyst secondary collection liquid 29' containing a remaining heavy metal compound from wastewaters 26' and 28' generated in the above steps S7 and S9.

(S11) Biological treatment step: a step of biologically treating the whole amount or a part of wastewaters discharged from the above steps S1 to S10.

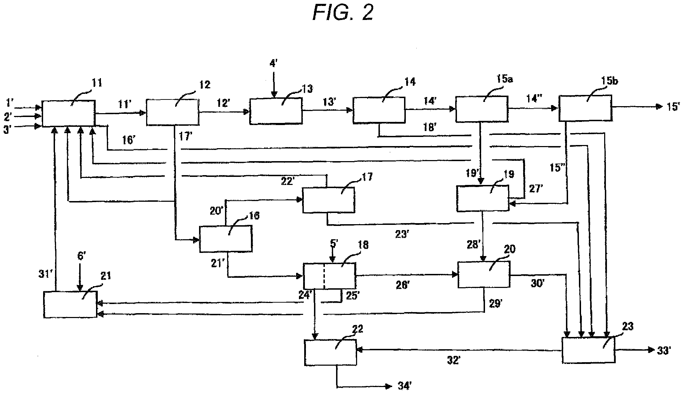

These steps will be described in more detail based on FIG. 2. FIG. 2 is a drawing showing a production flow example of the production steps of highly purified terephthalic acid according to the invention.

1. Oxidation step (S1)

The step S1 is an oxidation reaction step of oxidizing p-xylene in hydrous acetic acid to obtain a crude terephthalic acid slurry. Namely, p-xylene 1' and a solvent 3' comprising acetic acid and the like are first mixed and transferred to an oxidation reaction apparatus 11, and p-xylene 1' is oxidized in the solvent 3' in the presence of a catalyst 31' composed of a heavy metal and a bromine compound using molecular oxygen 2'. Thereby, a crude terephthalic acid slurry 11' is formed and then, it is transferred to the step S2. Moreover, an oxidation discharged gas washing water (wastewater) 16' is treated in the step S11 to be detailed later.

The catalyst used in the oxidation of p-xylene 1' is not particularly limited so far as it has an ability to oxidize an aromatic compound having an alkyl group to convert it into an aromatic carboxylic acid but a heavy metal compound is usually used. Examples of the heavy metal in the heavy metal compound include cobalt, manganese, nickel, chromium, zirconium, copper, lead, hafnium, and cerium. They can be used singly or in combination and a combined use of cobalt and manganese is preferred. Examples of such a heavy metal compound include acetate salts, nitrate salts, acetylacetonate salts, naphthenate salts, stearate salts, and bromides and acetate salts and bromides are preferred.

Moreover, the catalyst may contain a promoter according to need and a bromine compound is usually used as the promoter. Examples of the bromine compound include inorganic bromine compounds such as molecular bromine, hydrogen bromide, sodium bromide, potassium bromide, cobalt bromide, and manganese bromide and organic bromine compounds such as methyl bromide, methylene bromide, bromoform, benzyl bromide, bromomethyltoluene, dibromoethane, tribromoethane, and tetrabromoethane. These bromine compounds can be also used singly or in combination of two or more thereof.

Namely, the catalyst to be used in the oxidation of p-xylene 1' in the invention is particularly preferably a combination of a cobalt compound, manganese compound, and a bromine compound. In particular, a combination of cobalt acetate, manganese acetate, and hydrogen bromide is more preferred.

In the invention, a catalyst composed of a combination of the above heavy metal compounds and bromine compound contains a bromine atom in an amount of 0.05 mol or more to 10 mol or less, more preferably 0.1 mol or more to 5 mol or less based on 1 mol of the heavy metal(s).

Such a catalyst is used in the range of 10 mass ppm or more to 10,000 mass ppm or less, more preferably 100 mass ppm or more to 5,000 mass ppm or less, further preferably 200 mass ppm or more to 3,000 mass ppm or less. When the amount of the catalyst is the aforementioned lower limit or more, the reaction rate tends to be increased and when the amount is the aforementioned upper limit or less, the cost tends to be reduced.

The temperature at the oxidation reaction of p-xylene 1' in the oxidation reaction apparatus 11 is preferably 140°C or higher to 230°C or lower, more preferably 150°C or higher to 210°C or lower, and further preferably 170°C or higher to 200°C or lower. When the reaction temperature is lower than the above range, the reaction rate tends to be lowered and when the temperature exceeds the above range, the loss of the acetic acid solvent by burning tends to increase. The reaction pressure is necessarily at least a pressure at which the mixture can maintain its liquid phase at the reaction temperature and should be higher than normal pressure. Specifically, the pressure is preferably 0.2 MPa or higher to 6 MPa or lower (absolute pressure) and more preferably 0.4 MPa or higher to 3 MPa or lower (absolute pressure).

As the oxidation reaction apparatus 11, a stirring tank, a bubbling tower, or the like is usually employed. In the case where a bubbling tower is used as an oxidation reaction apparatus 11, the reaction temperature is slightly lower than the case where a stirring tank is used, and is preferably 140°C or higher to 180°C or lower and more preferably 150°C or higher to 170°C or lower.

2. First solid-liquid separation step (S2)

The step S2 is a step of subjecting the above crude terephthalic acid slurry 11' to solid-liquid separation and washing and drying the resulting terephthalic acid cake to thereby obtain separated mother liquid/washing liquid 17' and crude terephthalic acid 12' in a solid-liquid separation/washing/drying apparatus 12.

As a method for solid-liquid separation, there is a method of treating the slurry in a solid-liquid separator while maintaining the slurry at high temperature and high pressure. Moreover, since the crude terephthalic acid slurry 11' is in a pressurized state, the crude terephthalic acid dissolved may precipitate when the pressure is lowered. Therefore, there is a method of treating the crude terephthalic acid slurry 11' in the solid-liquid separator after the slurry is transferred to a crystallization tank (not shown in the figure) and cooling through pressure release is performed to precipitate crude terephthalic acid dissolved. In this collection, the above cooling through pressure release means an operation that a target liquid is allowed to cool through expansion and vaporization of the solvent component by releasing the pressure (pressure dropping) to a lower pressure condition than the pressure of the target liquid.

Crude terephthalic acid 12' is obtained by washing and drying the crude terephthalic acid cake thus obtained. As a washing liquid, acetic acid is usually employed and the acetic acid 22' collected in the step S9 to be mentioned later may be used or fresh acetic acid may be used.

The resulting crude terephthalic acid 12' contains 4-carboxybenzaldehyde (hereinafter sometimes referred to as 4CBA) and the like, which are oxidation intermediates, as impurities. For removing them, the crude terephthalic acid 12' is transferred to the step S3.

3. Hydrogenation step (S3)

The step S3 is a step of dissolving the above crude terephthalic acid 12' in water and hydrogenating the solution to effect reduction treatment by adding hydrogen 4' in a hydrogenation reaction apparatus 13. Namely, the step is a step of reducing 4CBA as an impurity to form p-toluic acid. Since p-toluic acid is more water-soluble than terephthalic acid, p-toluic acid can be separated from the hydrogenation treatment liquid 13' in the step S5 to be detailed later. By returning the p-toluic acid to the above step S1, it is used as a starting material for terephthalic acid. The hydrogenation treatment liquid 13' is then transferred to the step S4.

### 4. Crystallization step (S4)

The step S4 is a step of crystallizing the above hydrogenation treatment liquid 13' to obtain a highly purified terephthalic acid slurry 14' in a crystallization apparatus 14. As crystallization methods, there may be mentioned a method comprising evaporation and removal of water as a solvent and subsequent cooling, a method comprising cooling through pressure release, and the like. In the step, as mentioned above, since p-toluic acid is highly water-soluble, most of the acid remains dissolved, so that p-toluic acid and terephthalic acid can be separated in the next step S5. The highly purified terephthalic acid slurry 14' is transferred to the next step S5 and a condensed water (wastewater) 18' generated at the crystallization of the step S4 is treated in the step S11 to be detailed later.

### 5. Second solid-liquid separation step (S5)

The step S5 is a step of subjecting the above highly purified terephthalic acid slurry 14' to solid-liquid separation, washing the resulting product, and separating it into a highly purified terephthalic acid cake and a separated mother liquid and a washing liquid (a highly purified terephthalic acid separated mother liquid and the like 19') in a solid-liquid separation/washing apparatus 15a. As a separator, a known one such as a filtration machine or a centrifugal machine can be adopted.

### 6. Drying step (S6)

The step S6 is a step of drying the highly purified terephthalic acid cake to obtain highly purified terephthalic acid 15' and a dry condensed liquid 15" in a drying apparatus 15b. As the drying apparatus, a dryer by evaporation through pressure release, a usual fluidizing dryer, or the like is used. The dry condensed liquid 15", which is derived from condensation of a vapor-phase portion generated from evaporation through pressure release, contains components similar to those in the highly purified terephthalic acid separated mother liquid 19'.

### 7. Organic compound collection step (S7)

The step S7 is a step of collecting organic compounds from the whole amount or a part of the highly purified terephthalic acid separated mother liquid and the like 19' discharged from the above step S5 and the dry condensed liquid 15" discharged from the above step S6. The highly purified terephthalic acid separated mother liquid and the like 19' and the dry condensed liquid 15" discharged from the above step S6 contain impurities such as p-toluic acid, the catalyst, terephthalic acid, and the like, and hence, p-toluic acid, terephthalic acid, and the like are collected through precipitation by cooling in a p-toluic acid and the like collection apparatus 19 and the organic substances such as p-toluic acid 27' are returned to the step S1. Since heavy metal compounds and the like remain in the separated p-toluic acid and the like separated mother liquid 28', the mother liquid is transferred to the step S10 to be detailed later and the heavy metal compounds and the like will be collected and re-used therein.

### 8. Recycling step (S8)

The step S8 is a step of recycling a part or the whole amount of the separated mother liquid/washing liquid 17' obtained in the above step S2 to the step S1. Of the separated mother liquid/washing liquid 17', the separated mother liquid is preferably diverged into a recycling mother liquid and a purging mother liquid with maintaining a pressure higher than normal pressure. Furthermore, the pressure is preferably a pressure which substantially maintains the operation pressure in the step S2. The diverging ratio of the recycling mother liquid to the purging mother liquid can be arbitrarily controlled depending on the production process but the lower limit of the recycling ratio of the separated mother liquid {Mass of recycling mother liquid x 100/(Mass of recycling mother liquid + Mass of purging mother liquid)} is preferably 50% or more, more preferably 60% or more, and further preferably 70% or more. By controlling the recycling ratio to the above range, valuable components in the separated mother liquid can be re-used and load on the wastewater treatment step is reduced, and the amount of waste products can be also reduced, so that the above recycling ratio is preferred. Moreover, the whole amount of the separated mother liquid can be recycled but the upper limit of the recycling ratio is preferably 90% or less, more preferably 80% or less. By controlling the recycling ratio to the above range, the accumulation of impurities in the system can be suppressed and improvement in quality of terephthalic acid product is achieved, so that the above recycling ratio is preferred.

Of the separated mother liquid/washing liquid 17', the recycling of the washing water is not always necessary but the washing water is preferably recycled. The recycling ratio of the washing liquid {Mass of recycling washing liquid x 100/ (Mass of recycling washing liquid + Mass of purging washing liquid) } is in the range of usually 60% or more, more preferably 75% or more and 100% or less. By recycling the washing liquid, valuable components in the washing liquid can be re-used, load on the wastewater treatment step is reduced, and the amount of waste products can be also reduced, so that the recycling is preferred.

9. Primary collection step (S9)

The step S9 is a step of collecting acetic acid 22' from the separated mother liquid (purging mother liquid) and the washing liquid (purging washing liquid) unrecycled in the above step S8, the separated mother liquid and the washing liquid 17' are obtained in the step 2, and subsequently collecting valuable components such as a catalyst metal component. Specifically, the evaporated solvent 20' obtained by evaporating the separated mother liquid/washing liquid 17' in a solvent evaporation apparatus 16 is subjected to dehydrate in a dehydration/distillation apparatus 17, thereby the acetic acid 22' contained in the separated mother liquid/washing liquid 17' in a largest amount being collected. On this occasion, a dehydration bottom liquid (wastewater) 23' formed in the dehydration/distillation apparatus 17 will be treated in the step S11 to be detailed later. Then, a concentration residue 21' formed in the solvent evaporation apparatus 16 is again transformed into a slurry by adding water in a catalyst collection/regeneration apparatus 18 and separated into solid matter and a separated mother liquid by a filtration machine. After efficient washing is carried out for minimizing an attached mother liquid in the solid matter, a filtration residue 24' is incinerated together with an activated sludge 32' generated in the step S11 by an incineration apparatus 22. The filtrate generated here will be treated as a catalyst regeneration step wastewater 26' in the step S10 to be mentioned later.

Then, after the separated mother liquid and the washing liquid obtained by filtration after the above slurry re-formation are neutralized with an aqueous sodium hydroxide solution, they are reacted with an aqueous sodium carbonate solution 5' to form cobalt carbonate and manganese carbonate and the slurry containing the carbonate salts is subjected to solid-liquid separation to separate a cake of the carbonate salts. Thereafter, a slurry is again formed by adding water and then is reacted with acetic acid to form cobalt acetate and manganese acetate. The resulting slurry is referred to as a catalyst regeneration primary collection liquid 25'. The catalyst regeneration primary collection liquid 25' is mixed with a catalyst secondary collection liquid 29' to be mentioned later in a catalyst liquid mixing tank 21 and the resulting mixture is supplemented with a supplementing catalyst 6' in an amount which supplements the lost catalyst in the production steps, the supplemented mixture being returned to the step S1 as a catalyst 31'.

10. Secondary collection step (S10)

The step S10 is a step of obtaining a catalyst secondary collection liquid 29' containing a remaining heavy metal compound from the p-toluic acid and the like separated mother liquid 28' generated in the step S7 and/or the catalyst regeneration step wastewater 26' generated in the step S9 (hereinafter sometimes collectively referred to as treatment wastewater) by a catalyst collection/purification apparatus 20. Namely, the step S10 is a step of collecting the heavy metal components such as cobalt and manganese derived from the catalyst remaining in the treated wastewater. Specifically, the wastewater 28' from the above step S7 and/or the wastewater 26' from the step S9 are passed through an adsorption step to adsorb the heavy metal compounds with a chelate resin and, after the adsorption, they are desorbed and regenerated with an aqueous hydrogen bromide solution.

Incidentally, the treatment wastewater obtained in the invention may contain one or more compounds selected from terephthalic acid and p-toluic acid, 4-carboxybenzaldehyde, 3-carboxybenzaldehyde, benzoic acid, isophthalic acid, and 2,6-dicarboxyfluorenone which are formed as impurities.

The following will describe the step S10, which is a characteristic of the invention, in more detail. The chelate resin for use in the invention is a resin capable of selectively adsorbing a specific metal by introducing a chelate-forming group (hereinafter, a chelate group), which easily forms a chelate bond with a metal, instead of an ion-exchange group of an ion-exchange resin. The chelate group contains a combination of the same or different two or more elements such as N, S, O, and P as electron-donating elements as in the case of common chelating agents and examples of types thereof include N-O based, S-N based, N-N based, O-O based ones. When any of these chelate groups is bonded to a three-dimensional polymer base, a chelate resin having selectivity to a specific metal characteristic to a chelate group is obtained. Although the removal of heavy metals is also possible with a cation-exchange resin, a large amount of metals unnecessary to remove, such as alkali metals and alkaline earth metals are present in wastewater and thus they are simultaneously adsorbed to lead to waste a regenerating agent, so that it is necessary to use a chelate resin. The chelate group is not particularly limited so far as it has a metal selectivity and examples thereof include an iminodiacetic acid group, a polyamine group, a thiourea group, an aminophosphonic acid group, a polyacrylic acid group, and an N-methylglucamine group. Of these, an iminodiacetic acid group is more preferred.

These chelate groups are preferably ionized with an alkali metal wholly or partially prior to use. As the alkali metal to be used at that time, there may be mentioned lithium, potassium, or sodium. Of these, sodium is most common and preferred.

For ionization of such a chelate resin with sodium, it is preferred to perform the ionization using an aqueous sodium hydroxide solution by a fixed bed flow method wherein the chelate resin having a hydrogen form as a functional terminal group is packed. As the sodium hydroxide to be used at that time, there is adopted one having a concentration of preferably 0.5% by mass or more to 20% by mass or less, more preferably 1% by mass or more to 10% by mass or less in an aqueous solution. Moreover, the linear velocity adopted at the ionization by the fixed bed flow method is preferably 1 m/hr or more to 20 m/hr or less, more preferably 2 m/hr or more to 15 m/hr or less. For the ionization mode on a fixed bed, an up-flow mode is more preferred than a down-flow mode and a condition where the chelate resin is immersed in an aqueous sodium hydroxide solution for 2 hours or more is preferred. The temperature adopted at the ionization is preferably 10°C or higher to 80°C or lower, more preferably at around ordinary temperature (15°C or higher to 40°C or lower) . In the invention, in the case where the functional group of the chelate resin has been already ionized wholly or partially with an alkali metal as above at the time point of delivery, the above operation is not always necessary.

As the resin base to which the chelate group for use in the invention is bonded, there may be mentioned a cross-linked polystyrene, a copolymer of styrene and divinylbenzene, crosslinked polyacrylic acid, and the like but a cross-linked polystyrene and a copolymer of styrene and divinylbenzene are particularly preferred.

The higher-order structures of the base constituting the chelate resin are generally classified into a gel type, a porous type, and a highly porous type and any one may be used in the invention. Of these, the porous type or the highly porous type is preferred and the porous type is most preferred.

(Uniformity Coefficient)

The invention relates to a method for treating a wastewater comprising bringing a treatment wastewater into contact with a chelate resin having a specific shape to collect a heavy metal compound contained in the wastewater by the chelate resin. Namely, in the first invention and the fourth embodiment, the uniformity coefficient showing uniformity of particle size of the chelate resin is 1.4 or less, preferably 1.2 or less, more preferably 1.1 or less, and particularly preferably 1.05 or less. When the uniformity coefficient exceeds the above range, pressure loss in the resin layer is apt to occur when a treatment wastewater is adsorbed thereon and then the resin is regenerated by the fixed bed flow method and the pressure loss may be one cause of decrease in deterioration rate to be mentioned later.

The uniformity coefficient can be measured by the following method. First, about 3 g of a sample (chelate resin swollen with water) is weighed out and attached water is removed by mixing the sample with about 0.06 g of silica fine particles . It is charged into the upper part of a sonic vibration type automated sieving particle size distribution analyzer (manufactured by Seishin Enterprise Co., Ltd., Robot Sifter RPS-85) on which JIS standard sieves (opening: 1180 $\mu$m, 850 $\mu$m, 710 $\mu$m, 600 $\mu$m, 425 $\mu$m, 355 $\mu$m) have been set. At the lowermost part of the sifter, a sieve having an opening of 106 $\mu$m is used for removing silica fine particles (white carbon) alone. The operating conditions of the particle size distribution analyzer are as follows: LEVEL (intensity) 7 to 9, TIME (period) 5 minutes, INTERVAL (interval) 1 second. The mass of the sifted sample on each sieve is automatically measured. From the values obtained, the volume ratio of each particle size is calculated according to the following equations. In this connection, white carbon is not contained in the calculation since it passes through the sieve having an opening of 106 $\mu$m.

$$V (g) = a + b + c + d + e + f + g \text{ (a to g: mass of sample on each sieve)}$$

a' (%) = a/V x 100 a': volume ratio of particles having a particle size of 1180 $\mu$m or more
b' (%) = b/V x 100 b': volume ratio of particles having a particle size of 850 $\mu$m or more and less than 1180 $\mu$m
c' (%) = c/V x 100 c': volume ratio of particles having a particle size of 710 $\mu$m or more and less than 850 $\mu$m
d' (%) = d/V x 100 d': volume ratio of particles having a particle size of 600 $\mu$m or more and less than 710 $\mu$m
e' (%) = e/V x 100 e': volume ratio of particles having a particle size of 425 $\mu$m or more and less than 600 $\mu$m
f' (%) = f/V x 100 f': volume ratio of particles having a particle size of 355 $\mu$m or more and less than 425 $\mu$m
g' (%) = g/V x 100 g': volume ratio of particles having a particle size of less than 355 $\mu$m

From the values a' to g', plotting is performed on a logarithmic probability coordinate where the abscissa shows cumulative total (%) of remaining particles on each sieve and the ordinate shows opening size ($\mu$m) of each sieve. For example, since the plot on the ordinate of 425 μm is cumulative total of particles having a particle size of 425 μm or more, the total value of a' to e' is plotted on the abscissa. From the plotting results, 3 plots are selected in the order of larger particle mass (in the order of higher value on the abscissa) and a line is drawn as close to the plots as possible (if necessary, using least square method or the like) . From the line, an opening size (μm) when the cumulative total of the remaining particles (abscissa) is 90% and an opening size (μm) when the cumulative total is 40% are determined and then the uniformity coefficient is determined according to the following equation.

[Suu 1]

Uniformity coefficient = Opening size (μm) corresponding to cumulative total of 40% / Opening size (μm) corresponding to cumulative total of 90% (effective size)

(Average Particle Size)

Moreover, the average particle size of the chelate resin for use in the invention is preferably 0.2 mm or more, more preferably 0.4 mm or more, further preferably 0.5 mm or more and preferably 2 mm or less, more preferably 1 mm or less, further preferably 0.7 mm or less, particularly preferably 0.65 mm or less. When the average particle size of the chelate resin is less than the above range, particles having a small particle size tend to be deposited at the lower part of the chelate resin tower and there is a case where occlusion of the chelate resin tower occurs or a case where an adsorption efficiency decreases by a dense filling, further, an outflow of the chelate resin from the upper part of the chelate resin tower, occlusion of filter or likes occurs whereby there is a case where a stable adsorption operation becomes difficult. When the average particle size of the chelate resin exceeds the above range, there is a case where the flow in the chelate resin tower becomes unstable/nonuniform, whereby there is a case where an adsorption efficiency decreases.

In the invention, for the measurement of the average particle size, the same operations as in the aforementioned measurement of the uniformity coefficient are performed and the opening size (μm) corresponding to the cumulative total of the remaining particles of 50% is used.

(Cu Adsorption Capacity)

The chelate resin for use in the invention preferably has a larger chelating ability before wastewater treatment and the Cu adsorption capacity before use is preferably 0.5 mmol/mL or more, more preferably 0.7 mmol/mL or more. An upper limit of the Cu adsorption capacity is not limited but is usually 2 mmol/mL or less. The Cu adsorption capacity is measured as a total exchange capacity using Cu as a metal to be adsorbed according to the following method.

About 6 g of the sample chelate resin is accurately weighed. Then, it is placed in a 1L Erlenmeyer flask fitted with a stopcock and 200 mL of 0.05M-$CuCl_2$ is added thereto using a whole pipette. The Erlenmeyer flask containing the sample and 0.05M-$CuCl_2$ is shaken in a constant-temperature shaker at $30\pm2°C$ for 6 hours. After shaking, 10 mL of a supernatant is sampled into a 300 mL conical beaker using a whole pipette.

Then, 90 mL of distilled water, 1 mL of a buffer solution to be mentioned later, and a suitable amount of an indicator to be mentioned later are added thereto and the mixture is titrated with a 0.01M-EDTA solution (a mL). As a blank test, titration is performed in a similar manner except that 10 mL of 0.05M-$CuCl_2$ is used instead of 10 mL of the above supernatant (b mL).

Buffer solution: a solution obtained by dissolving 5.8 mL of gracious acetic acid in 100 mL of water is wholly mixed with a solution obtained by dissolving 13.6 g of sodium acetate in 100 mL of water to form a buffer solution.

Indicator: a solution obtained by dissolving 0.1 g of PAN (1-pyridylazo-2-naphthol) in 100 mL of methanol.

An exchange capacity is calculated according to the following equation.

[Suu 2]

$$\text{Cu adsorption capacity (mmol/mL)} = \{(b-a) \times F \times 0.01 \times 200/10\} / \text{sample (g)} \times \text{Apparent density} / 1000$$

F: titer of 0.01M-EDTA

In the second embodiment, the decreasing rate of Cu adsorption capacity of the chelate resin under the adsorption of wastewater and regeneration conditions to be mentioned later is 11%/month or less, preferably 10%/month or less, more preferably 7%/month or less, and further preferably 6%/month or less. A lower limit of the decreasing rate of Cu adsorption capacity is not limited but is usually 0.3%/month or more. Moreover, it is desirable to select and use a chelate resin whose decreasing rate of Cu adsorption capacity falls within the above range. When the decreasing rate of Cu adsorption capacity exceeds the above range, the adsorption of heavy metals and regeneration treatment tend to require large efforts and thus decrease in treating ability and increase in production costs may be invited, so that the case is industrially disadvantageous.

The following will describe a measuring method of the Cu adsorption capacity of the chelate resin for use in the invention.

The chelate resin tower to be used is a fixed bed flow reactor having an almost cylindrical shape (a fixed bed type described in FIG. 11·67 on page 901 of Kagaku Kogyo Binran, revised 4th edition, Maruzen Co., Ltd., published on October 24, 1978). The ratio of the inner diameter to the height at the portion to which a chelate resin is packed is 1.0:0.7 and particles of the chelate resin is packed until 50% of the height in a still-standing state. Namely, upper 50% thereof is filled with a liquid and the chelate resin particles are capable of flowing to the upper part by the flow of the liquid. The volume of the part to which the chelate resin is packed is 1 $m^3$ or more.

(1) Adsorption operation: An aqueous solution (prepared by dissolving Co acetate tetrahydrate) having a Co concentration of $5.0\pm0.5$ mass ppm set at a pH of $5.5\pm0.2$ and a temperature of $55°C+2°C$ is passed through a chelate resin tower packed with a sodium-type chelate resin at a linear velocity of $0.15\pm0.02$ m/min, a residence time of $13\pm2.0$ min, and up-flow mode. The time point when the Co concentration at the exit of the chelate resin tower reaches 1.0 mass ppm is regarded as a breakthrough region and thus the adsorption operation is terminated. In this connection, for the measurement of the Co concentration, JIS K 0102 60 (60. 3: ICP emission spectrochemical analysis) is used.

(2) Regeneration operation: A 10+1% by mass aqueous hydrogen bromide solution as a regenerating agent is passed through the resin tower, which has reached the breakthrough region, at room temperature at a linear velocity of $0.083\pm0.008$ m/min and the time point when 55+2% or more of Co adsorbed is desorbed by the desorption operation is regarded as end of desorption. Subsequently, using pure water in a volume the same as the volume of the chelate resin tower or more, the resin tower is washed by passing the water at a linear velocity of 0.15+0.02 m/min.

After the washing with pure water, the chelate resin is converted from an H (hydrogen) form into a Na form by passing a $5.0\pm0.5\%$ by mass aqueous sodium hydroxide solution through the tower at a temperature of $35\pm2°C$ and a linear velocity of $0.083\pm0.008$ m/min at up-flow mode for 1hour or more. By this operation, 90% or more of the resin is converted into the Na form and then, successively, the adsorption operation of (1) is started.

After the above adsorption operation and regeneration operation are repeated for 6 months, the decreasing rate of the Cu adsorption capacity is calculated according to the following equation.

$$\text{Decreasing rate of Cu adsorption capacity [\%/month]} = (a - b)/(a \times 6)$$

a: Cu adsorption capacity of chelate resin before test [mmol/mL]
b: Cu adsorption capacity of chelate resin after 6 months of test [mmol/mL]

The chelate resin used in the present invention preferably has an elasticity in a state of immersion in water.

As one specific example of the suitable chelate resin having properties as above, there may be, for example, mentioned Lewatit (R) MonoPlus TP 207 commercially available from Sybron Chemicals Inc. A LANXESS COMPANY without limitation thereto.

The method for adjusting the decreasing rate of Cu adsorption capacity of the chelate resin within the above range can be realized by selecting the chelate resin as mentioned above and also by a packing method of the chelate resin to the chelate resin tower or by optimizing the structure of the chelate resin tower. Specifically, it is preferred to design the structure so that the treatment wastewater may uniformly pass through the space between the chelate resin particles during the passage of the treatment wastewater through the region to which the chelate resin is packed. In other words, it is preferred to design the structure so that there is no detention area through which the treatment wastewater does not pass or the treatment wastewater does not pass through only a specific region. Moreover, it is preferred to design the structure so that a partition such as mesh, punching metal or filter is provided in the region where the chelate resin is packed and thus the chelate resin particles having a small particle size are not scattered together with the treatment wastewater. In this connection, when the chelate resin having a specific uniformity coefficient defined by the invention is used, the decrease in performance owing to the scattering of the chelate resin particles having a small particle size can be suppressed. Further, in the inside of the chelate resin tower during discharging, a chelate resin layer is formed at the lower part, and a layer of only a wastewater is formed at the upper part. Thus, the chelate resin particles can be suspended and convected in the layer of only a wastewater at the upper part, and it is possible to increase the decreasing rate of Cu adsorption capacity by optimizing a fluid volume of the layer of only a wastewater at the upper part or a quantitative balance between the upper layer and the chelate resin layer.

The third embodiment relates to a method for treating a wastewater comprising bringing a treatment wastewater into contact with a chelate resin to collect a heavy metal compound contained in the treatment wastewater by the chelate resin and subsequently regenerating the chelate resin to obtain a regeneration liquid containing the heavy metal compound, wherein the wastewater is brought into contact with the chelate resin under specific conditions and further the chelate resin after the contact with the wastewater is regenerated under specific conditions.

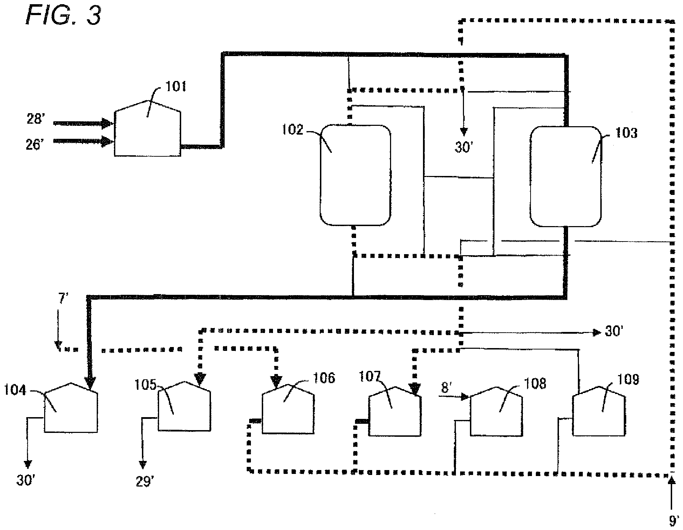

The following will describe the method and conditions for adsorbing the wastewater containing heavy metal compounds such as cobalt and manganese using the chelate resin with reference to FIG. 3. FIG. 3 is a drawing showing a flow example for the heavy metal compound collection step according to the invention.

The p-toluic acid and the like separated mother liquid 28' generated in the step S7 and the catalyst regeneration step wastewater 26' generated in the step S9 are mixed in a pH adjusting tank 101 to adjust the pH and the mixture is first passed through either of a chelate tower 102 or 103 to which the above chelate resin has been packed. The chelate towers 102 and 103 are usually a fixed bed type, and a flow method is adopted for the liquid passage. The permeated liquid passed through either of the chelate resin tower 102 or 103 is transferred to the step S11 via a wastewater tank 104. When the chelate resin tower 102 reached a breakthrough region, the passage of the treatment wastewater is switched to the chelate resin tower 103 and the permeated liquid is transferred to the wastewater tank 104 as above. A thick solid line in Fig. 3 shows a flow of the wastewater to be treated.

The pH of the wastewater to be passed through the chelate resin tower 102 or 103 is adjusted in the pH-adjusting tank 101 and the pH of the treatment wastewater is 5.1 or more, preferably 5.2 or more, further preferably 5.3 or more and 5.9 or less, preferably 5.8 or less, further preferably 5.7 or less. When the pH of the wastewater exceeds the above range, the heavy metal compounds may precipitate to deposit on the surface of the chelate resin, so that they become impossible to collect. When the pH of the wastewater is less than the above range, terephthalic acid and organic substances such as p-toluic acid contained in the wastewater may deposit or the collection rate of the heavy metal compounds may decrease.

The temperature of the treatment wastewater to be passed through the chelate resin tower 102 or 103 is preferably 51°C or higher, more preferably 53°C or higher, further preferably 55°C or higher and preferably 59°C or lower, more preferably 57°C or lower. When the temperature of the wastewater is lower than the above range, in the case where terephthalic acid is contained in the wastewater, it tends to easily precipitate and the collection rate of the heavy metal compounds decreases. When the temperature of the wastewater exceeds the above range, the chelate resin tends to easily deteriorate.

The liquid passage rate of the treatment wastewater to be passed through the chelate resin tower 102 or 103 is preferably 5 m/hr or more, more preferably 7 m/hr or more and preferably 14 m/hr or less, more preferably 10 m/hr or less as a linear velocity. When the flow rate exceeds the above range, drift and channeling may occur inside the chelate resin tower 102 or 103 and thus efficient adsorption tends to be impossible. When the flow rate is less than the above range, the chelate resin tower 102 or 103 should be enlarged and hence the case tends to be economically disadvantageous.

As the method for adsorbing the heavy metal compounds, there are a batch method and a continuous method but the continuous method is common and it is desirable to perform the adsorption by the continuous fixed bed flow method. Two or more treating tanks are placed in parallel, which are operated by a simultaneous liquid-passing method or a switching method. As a material for the treating tank, carbon steel lined with FRP or the like is usually employed.

The adsorption rate of cobalt and manganese under the above adsorption conditions is 80% or more based on the metal content at the inlet and 90% or more is further preferred.

After the adsorption step is finished and the tower is switched to the other chelate resin tower 102 or 103, the chelate resin tower 102 or 103 on which the adsorption has been finished is then washed with water upward and downward to wash out the adsorbed or deposited metals and organic compounds. With regard to the temperature and pressure on this occasion, conditions about the same as those for the above heavy metal adsorption are adopted.

The following will describe the desorption/regeneration method and conditions of the chelate resin tower 102 or 103.

As the regenerating agent for the adsorbed heavy metal compounds, an aqueous hydrogen bromide solution is used. In general, sulfuric acid, hydrochloric acid, or the like is used for the regeneration of chelate resins but, in the case of the invention, the use of hydrogen bromide is most preferred from the reason that cobalt, manganese, and a bromine compound are used as catalysts for oxidation reaction.

The concentration of the aqueous hydrogen bromide solution for use in the invention is 7.1% by mass or more, preferably 7.5% by mass or more, more preferably 8% by mass or more and 19% by mass or less, preferably 15% by mass or less, more preferably 12% by mass or less. In the invention, it has been found that the collected amount of the heavy metal compounds depends on the concentration of the aqueous hydrogen bromide solution and there is an optimum concentration. When the concentration of the aqueous hydrogen bromide solution is less than the above range or exceeds the above range, a good collection of the heavy metal compounds cannot be achieved.

The liquid passage rate of the aqueous hydrogen bromide solution 7' to the chelate resin tower 102 or 103 is preferably in the range of 1 m/hr or more to 10 m/hr or less as a linear velocity. When the rate falls within the range, no influence on the collected amount is observed. The temperature of the aqueous hydrogen bromide solution during the liquid passage is desirably in the range of around ordinary temperature (15°C or higher to 40°C or lower). The desorption rate of the heavy metal compounds with the aqueous hydrogen bromide solution is preferably 90% or more, more preferably 95% or more, and further, the ratio closer to 100% is more preferred.

In FIG. 3, the aqueous hydrogen bromide solution 7' is stored in a regenerating agent tank 106 and is passed through the chelate resin tower 102 or 103 on which the adsorption operation has been finished (102 in case of FIG. 3) along the dotted line to effect desorption of the heavy metal compounds. Then, after the tower is washed with water 9' to remove remaining metals and the like in the resin, an aqueous sodium hydroxide solution 8' stored in a sodium hydroxide tank 108 or a sodium hydroxide spare tank 109 is passed through the chelate resin tower 102 or 103 on which the regeneration operation has been finished to effect the regeneration of a chelate resin ionized with sodium or a chelate resin partially ionized with sodium.

The concentration of sodium hydroxide in the aqueous sodium hydroxide solution 8' is preferably 1% by mass or more to 10% by mass or less, more preferably 3% by mass or more to 7% by mass or less.

As the linear velocity in the liquid passage of the aqueous sodium hydroxide solution 8' to the chelate resin tower 102 or 103, there is adopted preferably 1 m/hr or more to 20 m/hr or less, more preferably 2 m/hr or more to 15 m/hr or less . The ionization method in the case where the chelate resin tower 102 or 103 is a fixed bed type is preferably at up-flow mode rather than at down-flow mode. On this occasion, preferred is a condition where the chelate resin is immersed in the aqueous sodium hydroxide solution for 2 hours or more. As the temperature for ionization, there is adopted preferably 10°C or higher to 80°C or lower, more preferably around ordinary temperature (15°C or higher to 40°C or lower).

The heavy metal compounds collected in the step S10 are stored in a catalyst secondary collection liquid tank 105 together with hydrogen bromide. Then, as a catalyst secondary collection liquid 29', the stored liquid is mixed with a catalyst regeneration primary collection liquid 25' in a catalyst liquid mixing tank 21 in FIG. 1 and, after a lost amount of the catalyst is supplemented, the mixture is recycled to the step S1 for re-use.

The catalyst secondary collection step wastewater 30' used for washing is transferred to a biological treatment apparatus 23 via a wastewater tank 104 and is treated therein.

Near to the end point of the desorption operation, the flow path of the permeated liquid is switched and the liquid is stored in a desorption operation final liquid tank 107. The liquid stored in the desorption operation final liquid tank 107 is used for passing through the chelate resin tower 102 or 103 at next-time desorption.

Also, the chelate resin tower is not limited to the case of operating two towers alternatively, but includes a case of simultaneously operating two towers in series and a case of properly combining an alternant operation and an in-line operation, using three or more towers

11. Biological treatment step (S11)

The step S11 is a step of biologically treating the whole amount or a part of wastewaters discharged from the above steps S1 to S10. The impurities in these final wastewaters are decomposed by means of a biological treatment apparatus 23. The biological treatment apparatus 23 is usually composed of a combination of a general precipitation tank and an aeration tank.

The wastewaters 16', 17', 18', 19', 23', and 30' discharged from the steps S1 to S10 are not always transferred to the biological treatment step directly without any treatment and treated therein but, in some cases, each of them is subjected to a treatment corresponding to the wastewater composition characteristic to each step and is used as it is for recycling without transferring it to the biological treatment step.

The treatment wastewater 33' after biological treatment is usually released to public water area such as river. The excess biological sludge 32' is incinerated in an incineration apparatus 22 and the ash 34' is discarded as an industrial waste.

According to the methods of the invention, the amount of the heavy metal compound discharged to the outside of the system can be suppressed to a minute amount of about 1% based on the total amount used in the step S1. Accordingly, a large reduction can be achieved relative to the conventional discharged amount of 5 to 10%.

In the above, the invention is described with regard to the process for producing highly purified terephthalic acid as a representative example of aromatic carboxylic acids but the invention can be applied to the case of moderately pure terephthalic acid, for example.

In the case of producing the moderately pure terephthalic acid, there contains steps of solid-liquid separation, washing, and drying after additional oxidation at high temperature and high pressure of the crude terephthalic acid slurry obtained by the oxidation reaction without hydrogenation. The separated mother liquid, washing liquid, and the like after the additional oxidation is partially re-used for recycling to the reaction step and the remaining separated mother liquid and washing liquid are treated for collection and re-use of valuable components similarly to the case of the highly purified terephthalic acid. Moreover, the heavy metal compounds contained are also possible to collect and re-use via similar steps.

Furthermore, the invention is also applicable to the production processes for other aromatic carboxylic acids such as isophthalic acid, which contain similar production steps where a heavy metal catalyst is used in the oxidation reaction, and advantages from the environmental and economical viewpoints are remarkable.

The method for treating a wastewater according to the invention may be applicable to not only a wastewater derived from an aromatic carboxylic acid production process but also a wastewater containing a wastewater derived from the other chemical plant. Even such a case, the heavy metal compound is efficiently collected and the regeneration of the chelate resin and further the recycling use of the regeneration liquid are carried out without any trouble.

The invention can provide a technology which not only brings about an economical effect derived from the wastewater treatment but also is friendly to the environment with practical usefulness and thus the invention is extremely important and highly effective also from the viewpoint of environmental measures.

[Examples]

The following will describe the invention more specifically with reference to Examples but the invention is not limited to the following Examples.

Example 1

In a production facility of highly purified terephthalic acid (production volume 75 ton/hr), p-xylene and about 3 mass equivalent of acetic acid based on p-xylene, cobalt acetate, manganese acetate, and hydrogen bromide as catalysts were continuously fed to a liquid phase oxidation reactor, and an oxidation reaction was carried out at a temperature of 185°C or higher to 195°C or lower and a pressure of 1.0 MPa or more to 1.7 MPa or less for a reaction time (average residential time) of 90 minutes. The amounts of the catalysts used were as follows: the cobalt component and the manganese component were each 300 mass ppm in terms of metal; the bromine component was 700 ppm, based on the solvent. As a gas for carrying out the oxidation reaction with molecular oxygen, air was used. On this occasion, the oxygen content in the air was 21% and thus a compressed air was fed into the reactor so that the oxygen concentration in the gas discharged from the reactor was 3% by volume or more to 7% by volume or less.

Then, the resulting oxidation slurry was continuously transferred to a low-temperature oxidation reactor, and an additional oxidation reaction was carried out at a temperature of 180°C or higher to 195°C or lower and a pressure of 0.9 MPa or more to 1.7 MPa or less for a reaction time of 40 minutes or more to 60 minutes or less. As a gas for carrying out the oxidation reaction, a compressed air (oxygen content 21%) was fed so that the oxygen concentration in the discharged gas was 3% by volume or more to 7% by volume or less. While the temperature and pressure of the resulting crude terephthalic acid slurry after completion of the reaction were maintained, the slurry was subjected to solid-liquid separation by means of a screen bowl decanter and then the resulting crude terephthalic acid cake was washed with an aqueous acetic acid solution. The crude terephthalic acid cake was dried by evaporation of attached mother liquid through pressure release in a pressurized drying machine and was transferred to the next purification step.

The whole amount of the washing liquid and 80% of the separated mother liquid obtained by the solid-liquid separation of the crude terephthalic acid slurry were recycled to the liquid-phase oxidation reactor. With regard to the remaining 20% of the separated mother liquid, low-boiling components such as acetic acid were first evaporated in two stages on an evaporator and the obtained acetic acid was re-used to the reaction step after dehydrate. The concentrate on the evaporator was again transformed into a slurry by adding water and then subjected to solid-liquid separation on a horizontal belt filter, followed by washing. The solid matter was regarded as a waste and catalyst components were collected from the separated liquid and re-used in the reaction step. The remaining liquid (wastewater 1) from which the catalyst components had been collected was subjected to wastewater treatment with a chelate resin to be mentioned later.

The crude terephthalic acid cake was mixed with water in a mixing tank and then heated and pressurized to 280°C or higher to 300°C or lower and 7 MPa or more to 10 MPa or less with steam and a heat transfer oil to effect dissolution. Thereafter, the solution was introduced into a hydrogenation reaction tower having a fixed bed of palladium-active carbon together with hydrogen to effect a hydrogenation reaction. The aqueous terephthalic acid solution after the reaction was continuously transferred to a crystallization tank and successively cooled through pressure release and crystallized in four-stage crystallization steps. Then, the resulting mixture was subjected to solid-liquid separation at 100°C and a highly purified terephthalic acid cake was washed with water and dried. As dryers, a pressurizing dryer for evaporation through pressure release and a fluidized bed dryer were employed and a highly purified terephthalic acid cake was obtained in a yield of 75 ton/hr. Since the separated mother liquid contained oxidation intermediates such as p-toluic acid, the mother liquid was further cooled to precipitate crystals and, after solid-liquid separation, the oxidation intermediates were collected as solid matter and recycled to the liquid-phase oxidation reaction step. The mother liquid (wastewater 2) after the oxidation intermediate cake was separated was combined with the aforementioned wastewater 1 (hereinafter referred to as raw wastewater), which was subjected to the following method for treating a wastewater.

First, the pH of the above raw wastewater was adjusted to 5.5 in a pH-adjusting tank 101 and the resulting wastewater was passed through the chelate resin towers 102 and 103 packed with the chelate resin (Lewatit (R) MonoPlus TP 207 manufactured by Sybron Chemicals Inc. A LANXESS COMPANY) shown in Table 1. In this connection, the ion of the chelate resin was expressed by a theoretical value and almost the whole amount thereof was converted into a sodium type. In the raw wastewater, Co as a heavy metal was contained in an amount of 5 ppm as well as a minute amount of Mn and, as organic compounds, terephthalic acid and p-toluic acid were contained, thus, CODcr being 4000 ppm. In this connection, the measurement of the Co concentration was performed in accordance with JIS K 0102 60 (60.3: ICP emission spectrochemical analysis) and CODcr was measured in accordance with JIS K 0102 20.

[Table 1]

|  |  | Example 1 | Comparative Example 1 |
|---|---|---|---|
| Chelate group |  | Iminodiacetic acid | Iminodiacetic acid |
| Ion form |  | Na | Na |
| Resin type |  | Porous | Porous |
| Cu adsorption capacity | (mmol/mL) | 0.71 | 0.71 |
|  | (mmol/g) | 2.43 | 2.36 |
| Average size (mm) |  | 0.59 | 0.74 |
| Uniformity coefficient |  | 1.04 | 1.41 |

The chelate resin towers 102 and 103 are all almost cylindrical shaped fixed bed flow reactors, the ratio of the inner diameter to the height at the portion to which a chelate resin was packed was 1.0:0.7, and particles of the chelate resin was packed until 50% of the height in a still-standing state. The volume of the portion to which the chelate resin was packed was 30 m$^3$ or more. The liquid passage was a flow mode and two towers (102 and 103) were placed in parallel, which were capable of being switched. The chelate resin tower 102 or 103 which reached a breakthrough region was subjected to operations such as regeneration, washing, and Na ion exchange to be mentioned later.

The temperature of the raw wastewater adjusted to pH 5.5 was raised to 55°C and was passed to the chelate resin tower 102 at a flow rate of 67.5 m$^3$/hr and a linear velocity of 8.9 m/hr. The wastewater after the liquid passage treatment was transferred to a wastewater tank 104 and stored therein, and then, the wastewater was transferred to a wastewater-treating apparatus.

The time point when the Co concentration at the exit of the chelate resin tower 102 reached 1 ppm or more was regarded as a breakthrough region and the liquid passage was continuously performed by switching the liquid passage into the chelate resin tower 103.

The Co concentration in the wastewater after liquid passage was about 0.01 to 0.04 ppm at an early stage of the operation. Thereafter, the Co concentration in the wastewater after liquid passage gradually elevated but could be maintained to less than 1 ppm as mentioned above. From the results, although the Co concentration in the wastewater discharged to outside of the system was usually 5 ppm, the concentration was able to be suppressed to less than 1 ppm by performing the treatment of the invention. In this connection, in the present Example, the time point when the Co concentration reached 1 ppm or more was regarded as a breakthrough region but the breakthrough region can be suitably set to any value so far as the value is more than the Co concentration at the early stage of the operation and can be suitably set depending on the regulation or the like of wastewater.

Then, in order to regenerate (desorb) the adsorbed Co and the other heavy metals, liquid passage was performed on the chelate resin tower 102 which had reached the breakthrough region using a 10% by mass aqueous hydrogen bromide solution as a regenerating agent from a regenerating agent tank 106. The temperature of the regenerating agent on this occasion was ordinary temperature and the liquid passage rate was 5 m/hr. By performing the liquid passage for 1 hour or more, 90% or more of Co was desorbed. The collected heavy metal compounds such as Co were stored in a catalyst secondary collection liquid tank 105 together with an aqueous hydrogen bromide solution as the regenerating agent and then was mixed, as a secondary collection liquid 29', with a primary collection liquid 25' in a catalyst mixing tank 21 in FIG. 1, recycled to the oxidation reaction step, and re-used.

After the regeneration operation with the aqueous hydrogen bromide solution was finished, water 9' was passed through the chelate resin tower 102 for washing to remove a minute amount of metals remaining in the resin. Thereafter, in order to prepare for next adsorption, a 5% by mass aqueous sodium hydroxide solution was passed from a sodium hydroxide tank 108 and a spare tank 109 through the chelate resin tower 102 which had been changed into a hydrogen form with the regenerating liquid. The liquid passage on this occasion was performed at up-flow mode at a linear velocity of 5 m/hr and a temperature of 35°C.

By performing a series of repeating operations of adsorption, washing, regeneration (desorption), washing, and sodium form exchange as above with switching between the chelate resin towers 102 and 103, the operations for collection of the heavy metal compounds and purification were repeatedly performed for 6 months.

As a result, the Cu adsorption capacity of the chelate resin used in the present Example decreased from 0.71 mmol/cm$^3$ at the start of its use (new resin) to 0.47 mmol/cm$^3$ and the decreasing rate of Cu adsorption capacity was 5.6%/month. This fact means that 34% of the ion exchange group was lost over a period of 6 months, as compared with unused resin.

Comparative Example 1

The raw wastewater was treated in the same manner and under the same conditions as in Example 1 except that the chelate resin was changed to a resin having a uniformity coefficient of 1.41 as shown in Table 1.

As a result, on 4 months after the start of the use, a series of continuous repeating operations of adsorption, washing, regeneration (desorption), washing, and sodium form exchange went into an industrially unusable level and thus the resin should be replaced with new one.

As a result of the measurement of the Cu adsorption capacity of the chelate resin in the same manner as in Example 1 after used in the present Comparative Example, the Cu adsorption capacity decreased from 0.71 mmol/cm$^3$ at the start of its use (new resin) to 0.40 mmol/cm$^3$ for 4 months of the use. This fact means that 46% of the ion exchange group was lost over a period of only 4 months, as compared with unused resin and the decreasing rate of Cu adsorption capacity was approximately 11.5%/month.

Reference Example 1

The raw wastewater was treated in the same manner and under the same conditions as in Example 1 except that the pH of the raw wastewater was adjusted to 6.0. As a result, it was found that the heavy metals in the raw wastewater precipitated, and thus not only liquid passage but also a series of continuous repeating operations of adsorption, washing, regeneration (desorption), washing, and sodium form exchange became impossible to perform.

Reference Example 2

The raw wastewater was treated in the same manner and under the same conditions as in Example 1 except that the pH of the raw wastewater was adjusted to 5.0. As a result, it was found that a little amount of organic compounds in the raw wastewater precipitated, and thus not only liquid passage but also a series of continuous repeating operations of adsorption, washing, regeneration (desorption), washing, and sodium form exchange became impossible to perform.

Reference Example 3

The raw wastewater was treated in the same manner and under the same conditions as in Example 1 except that the linear velocity in the liquid passage of the raw wastewater though the chelate resin towers 102 and 103 was changed to 15 m/hr. As a result, the breakthrough of the resin was accelerated due to the fast linear velocity and the decreasing rate of Cu adsorption capacity was 11.0%/month.

Comparative Example 2

The raw wastewater was treated in the same manner and under the same conditions as in Example 1 except that a 20% by mass aqueous hydrogen bromide solution was used in the regeneration treatment. As a result, it was found that the Co collection rate of the adsorbed heavy metals was only 80% as compared with the rate in Example 1 and thus it was found that the heavy metal collection rate decreased.

Comparative Example 3

The raw wastewater was treated in the same manner and under the same conditions as in Example 1 except that a 5% by mass aqueous hydrogen bromide solution was used in the regeneration treatment. As a result, the Co collection rate of the adsorbed heavy metals was only 75% as compared with the rate in Example 1 and thus it was found that the heavy metal collection rate decreased.

Comparative Example 4

The raw wastewater was treated in the same manner and under the same conditions as in Example 1 except that a 30% by mass aqueous hydrogen bromide solution was used in the regeneration treatment. As a result, the Co collection rate of the adsorbed heavy metals was only 25% as compared with the rate in Example 1 and thus it was found that the heavy metal collection rate decreased to a large extent. As a result, the continuous operation by repeating the adsorption and regeneration of the chelate resin was difficult.

Incidentally, the whole contents of Specification, Claims, Drawings, and Abstract of Japanese Patent Application No. 2008-186235 filed on July 17, 2008 are cited herein.

Industrial Applicability

According to the invention, it becomes possible to collect the heavy metal compounds such as cobalt and manganese contained in a wastewater derived from an aromatic carboxylic acid production process in a high efficiency and to re-use it. According to the invention, since the above effects are obtained, the above metal components released to outside of the production process can be suppressed to the minimum relative to the total amount of the above metal components used and thus it becomes possible to provide an environmentally-friendly aromatic carboxylic acid production process which is unprecedented. The process further affords a large economical effect, which is obtained by collecting and re-using the heavy metal compounds. In general, petrochemical plants are frequently constituted by different kinds of chemical plants in one area or in one industrial district as an aggregate. Therefore, industrial wastewater species discharged therefrom are different from one another but there is a case where plant wastewaters from different kinds of chemical plants discharging the heavy metal compounds as above are merged and released to the outside depending on the situation. Since the method for treating a wastewater according to the invention can achieve the collection and re-use of the heavy metal compounds such as cobalt and manganese contained in the wastewater in a high efficiency as far as the wastewater contains a wastewater derived from a production process of an aromatic carboxylic acid represented by terephthalic acid even when wastewaters from different types of chemical plants are present, the advantages are high not only from the economical viewpoint but also from the environmental viewpoint.

Description of Reference Numerals and Signs

11 Oxidation reaction apparatus
12 Solid-liquid separation/washing/drying apparatus
13 Hydrogenation reaction apparatus
14 Crystallization apparatus
15a Solid-liquid separation/washing apparatus
15b Drying apparatus
16 Solvent evaporation
17 Dehydration/distillation apparatus
18 Catalyst collection/regeneration apparatus
19 p-Toluic acid and the like collection apparatus

20 Catalyst collection/purification apparatus
21 Catalyst liquid mixing tank
22 Incineration apparatus
23 Biological treatment apparatus
101 pH adjusting tank
102, 103 Chelate resin tower
104 Wastewater tank
105 Catalyst secondary collection liquid tank
106 Regenerating agent tank
107 Desorption operation final liquid tank
108 Sodium hydroxide tank
109 Sodium hydroxide spare tank
1' p-Xylene
2' Molecular oxygen
3' Acetic acid or the like solvent
4' Hydrogen
5' Aqueous sodium carbonate solution
6' Supplementing catalyst
7' Aqueous hydrogen bromide solution
8' Aqueous sodium hydroxide solution
9' Water
11' Crude terephthalic acid slurry
12' Crude terephthalic acid
13' Hydrogenation treatment liquid
14' Highly purified terephthalic acid slurry
14" Highly purified terephthalic acid cake
15' Highly purified terephthalic acid
15" Dry condensed liquid
16' Oxidation discharged gas washing water
17' Separated mother liquid/washing liquid
18' Condensed water generated at crystallization
19' Highly purified terephthalic acid separated mother liquid and the like
20' Evaporated solvent
21' Concentration residue
22' Acetic acid
23' Dehydration tower bottom liquid
24' Filtration residue
25' Catalyst regeneration primary collection liquid
26' Catalyst regeneration step wastewater
27' Organic substances such as p-toluic acid
28' p-Toluic acid and the like separated mother liquid
29' Catalyst secondary collection liquid
30' Catalyst secondary collection step wastewater
31' Catalyst
32' Activated sludge
33' Effluent water
34' Industrial waste (incinerated ash)

**Claims**

1. A method for treating a wastewater, comprising obtaining a wastewater from an aromatic carboxylic acid production process, bringing the wastewater into contact with a chelate resin to collect a heavy metal compound contained in the wastewater by the chelate resin, wherein the chelate resin is particles having a uniformity coefficient of 1.4 or less, wherein the pH of the wastewater to be brought into contact with the chelate resin is 5.1 or more to 5.9 or less, and wherein the heavy metal is selected from cobalt and manganese.

2. The method for treating a wastewater according to claim 1, wherein the flow rate of the wastewater to be brought

**EP 2 301 893 B1**

into contact with the chelate resin is 5 m/hr or more to 14 m/hr or less.

3. The method for treating a wastewater according to claim 1 or 2, wherein the temperature of the wastewater to be brought into contact with the chelate resin is 51°C or higher to 59°C or lower.

4. The method for treating a wastewater according to any one of claims 1 to 3, wherein the Cu adsorption capacity of the chelate resin is 0.5 mmol/mL or more.

5. Use of a wastewater-treating apparatus for bringing a wastewater from an aromatic carboxylic acid production process into contact with a chelate resin to collect a heavy metal compound contained in the wastewater by the chelate resin, wherein the chelate resin is particles having a uniformity coefficient of 1.4 or less, wherein the pH of the wastewater to be brought into contact with the chelate resin is 5.1 or more to 5.9 or less, and wherein the heavy metal is selected from cobalt and manganese.

**Patentansprüche**

1. Ein Verfahren zur Behandlung eines Abwassers, umfassend Erhalt eines Abwassers aus einem Verfahren zur Herstellung einer aromatischen Carbonsäure, In-Kontakt-bringen des Abwassers mit einem Chelatharz, um eine in dem Abwasser enthaltene Schwermetallverbindung durch das Chelatharz zu sammeln, wobei es sich bei dem Chelatharz um Teilchen mit einem Ungleichförmigkeitsgrad von 1,4 oder weniger handelt, wobei der pH des Abwassers, das mit dem Chelatharz in Kontakt zu bringen ist, 5,1 oder mehr bis 5,9 oder weniger beträgt und wobei das Schwermetall aus Cobalt und Mangan ausgewählt ist.

2. Das Verfahren zur Behandlung eines Abwassers nach Anspruch 1, wobei die Strömungsrate des Abwassers, das mit dem Chelatharz in Kontakt zu bringen ist, 5 m/h oder mehr bis 14 m/h oder weniger beträgt.

3. Das Verfahren zur Behandlung eines Abwassers nach Anspruch 1 oder 2, wobei die Temperatur des Abwassers, das mit dem Chelatharz in Kontakt zu bringen ist, 51°C oder höher bis 59°C oder niedriger beträgt.

4. Das Verfahren zur Behandlung eines Abwassers nach einem der Ansprüche 1 bis 3, wobei das Cu-Adsorptionsvermögen des Chelatharzes 0,5 mMol/ml oder mehr beträgt.

5. Verwendung einer Abwasserbehandlungsvorrichtung zum In-Kontakt-bringen eines Abwassers aus einem Verfahren zur Herstellung einer aromatischen Carbonsäure mit einem Chelatharz, um eine in dem Abwasser enthaltene Schwermetallverbindung durch das Chelatharz zu sammeln, wobei es sich bei dem Chelatharz um Teilchen mit einem Ungleichförmigkeitsgrad von 1,4 oder weniger handelt, wobei der pH des Abwassers, das mit dem Chelatharz in Kontakt zu bringen ist, 5,1 oder mehr bis 5,9 oder weniger beträgt, und wobei das Schwermetall aus Cobalt und Mangan ausgewählt ist.

**Revendications**

1. Méthode de traitement d'eaux usées, comprenant obtenir des eaux usées provenant d'un procédé de production d'acide carboxylique aromatique, mettre les eaux usées en contact avec une résine chélatante pour collecter un composé de métal lourd contenu dans les eaux usées par la résine chélatante, dans laquelle la résine chélatante est des particules ayant un coefficient d'uniformité de 1,4 ou moins, dans laquelle le pH des eaux usées à mettre en contact avec la résine chélatante est de 5,1 ou plus à 5,9 ou moins, et dans laquelle le métal lourd est choisi parmi le cobalt et le manganèse.

2. Méthode de traitement des eaux usées selon la revendication 1, dans laquelle le débit des eaux usées à mettre en contact avec la résine chélatante est de 5 m/h ou plus à 14 m/h ou moins.

3. Méthode de traitement des eaux usées selon la revendication 1 ou 2, dans laquelle la température des eaux usées à mettre en contact avec la résine chélatante est de 51 °C ou plus à 59 °C ou moins.

4. Méthode de traitement des eaux usées selon l'une quelconque des revendications 1 à 3, dans laquelle la capacité d'adsorption de Cu de la résine chélatante est de 0,5 mmol/mL ou plus.

**5.** Utilisation d'un appareil de traitement des eaux usées pour mettre en contact les eaux usées provenant d'un procédé de production d'acide carboxylique aromatique avec une résine chélatante pour collecter un composé de métal lourd contenu dans les eaux usées par la résine chélatante, dans laquelle la résine chélatante est des particules ayant un coefficient d'uniformité de 1,4 ou moins, dans laquelle le pH des eaux usées à mettre en contact avec la résine chélatante est de 5,1 ou plus à 5,9 ou moins, et dans laquelle le métal lourd est choisi parmi le cobalt et le manganèse.

# FIG. 1

S8 ～ RECYCLING STEP → OXIDATION STEP ～ S1

CRUDE TEREPHTHALIC
ACID SLURRY 11'

S9 ～ PRIMARY
COLLECTION STEP ← FIRST SOLID-LIQUID
SEPARATION STEP ～ S2

SEPARATED MOTHER
LIQUID/WASHING
LIQUID 17'

CRUDE TEREPHTHALIC
ACID 12'

ACETIC ACID 22'
CATALYST REGENERATION
PRIMARY COLLECTION
LIQUID 25'

WASTEWATER 26'

HYDROGENATION STEP ～ S3

HYDROGENATION
TREATMENT LIQUID 13'

S10 ～ SECONDARY
COLLECTION STEP

WASTEWATER 28'
PURIFIED
HIGHLY PURED
TEREPHTHALIC ACID
SEPARATED MOTHER
LIQUID AND
THE LIKE 19'

CRYSTALLIZATION STEP ～ S4

PURIFIED
HIGHLY PURED TEREPHTHALIC
ACID SLURRY 14'

CATALYST SECONDARY
COLLECTION LIQUID 29'

S7 ～ ORGANIC COMPOUND
COLLECTION STEP ← SECOND SOLID-LIQUID
SEPARATION STEP ～ S5

PURIFIED
HIGHLY PURED TEREPHTHALIC
ACID CAKE 14'

DRY CONDENSED
LIQUID 15"

ORGANIC SUBSTANCES
SUCH AS p-TOLUIC ACID 27'

DRYING STEP ～ S6

HIGHLY PURE
TEREPHTHALIC ACID 15'

BIOLOGICAL
TREATMENT STEP ～ S11

FIG. 2

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5015788 A
- JP 2004321889 A
- JP 2006312166 A
- JP 2003507156 A
- JP 2008186235 A

**Non-patent literature cited in the description**

- Kagaku Kogyo Binran. Maruzen Co., Ltd, 24 October 1978, 901